# EUROPEAN PATENT SPECIFICATION

(11) **EP 1 763 186 B1**
(45) Date of publication and mention of the grant of the patent: **22.04.2009**
(21) Application number: 05255527.3
(22) Date of filing: 08.09.2005
(51) Int. Cl.: H04L 12/58

(54) **Method and apparatus for interfacing communications messages**
Verfahren und Vorrichtung zur Schnittstellenbildung von Kommunikationsnachrichten
Méthode et appareil pour afficher des messages de communications

(43) Date of publication of application: 14.03.2007
(73) Proprietor: Research In Motion Limited, Waterloo, Ontario N2L 3W8 (CA)
(72) Inventor: Vander Veen, Raymond, Waterloo Ontario N2V 2M6 (CA); Major, Harry R., Waterloo Ontario N2L 6N4 (CA)
(74) Representative: Roberts, Gwilym Vaughan

(56) References cited:
- US-A1- 2002 152 220
- US-A1- 2004 137 955

## Description

### TECHNICAL FIELD

The present invention relates, in general, to the field of communications devices capable of supporting voice and data services, and, in particular, to a method and apparatus for accessing communication messages associated with the voice and data services.

### BACKGROUND

Mobile communications devices supporting voice and data services provide a user access to and a user interface for a multitude of message services, such as call logs, email, Instant Messages (IM), Simple Message Service (SMS), and voice messages. Access to these services requires the mobile communications device provide a user with an interface platform capable of navigating the various messages these services provide. A user of mobile communications devices and services often use these devices and services because they are a convenient and efficient means of communication, A user interface of mobile communications device can be a distinguishing signature separating the device from other communications devices within the same market. A user interface system can either provide a user efficient and simple operational access to these services, resulting in a satisfied user, inefficient and difficult operational access to these services, resulting in an unsatisfied customer, or somewhere in between. If the user interface system providing the interface to these services is difficult to navigate, user satisfaction with the communications device may be unfavorable resulting in a less loyal customer to that particular product and company. The unification of these services requires a more sophisticated user interface to provide the user with the most efficient and simple navigation means.

Therefore, there is a need to provide enhanced user interface features for a communications device supporting voice and data services.
US 2004/0137955 discloses a mobile communication device providing a unified message function equipped to facilitate a user in interacting with communication messages of different message types supported by the mobile communication device via a unified message box.

### SUMMARY

To provide enhancements to user interface features associated with communications devices identified within the background a method and apparatus are provided for managing communications messages.
According to one aspect of the invention, there is provided a method of operating a communications device according to claim 1. According to another aspect of the invention there is provided a communication device according to claim 8.

In an embodiment, a communications device for processing and storing data and receiving communications messages is presented. The communications device is operative to receive a data element wherein the data element identifies the type of communications message received and sender identification information. The communications device is further operative to display a menu upon receiving the data element. The menu comprises at least one selectable object with the selectable object having a label identifying the message type. The communications device is further operative to receive a data item indicating selection of the selectable object. Upon receiving the data item, the communications device is further operative to generate a communications action. The communications action is dependent on the number of communications messages associated with the selectable object and the type of communications message associated with the selectable object.

In the embodiment, if only one message is associated with the selectable object, the communications device is operative upon receiving selection to either generate a communications action to display the communications message in the case the communications message is an email, IM, SMS, or any other comparable type, or connect to a voice mail system associated with the communications device. In the case multiple communications messages are associated with the selectable object, the communications device is operative upon receiving selection to either display a submenu comprising sender identification labels or a list comprising sender identification labels. The communications device is further operative to receiving selection of a label and to generate a communications action to either display the communications message associated with the selected label or connect to a voice mail system associated with the communications device.

### BRIEF DESCRIPTION OF THE DRAWINGS

Fig. 1 illustrates a block diagram of the user interface system;

Fig. 2A illustrates an exemplary user interface comprising a menu of selectable objects as displayed on a communications device supporting voice and data services and utilizing the user interface system;

Fig. 2B illustrates an exemplary user interface comprising a sub-menu of selectable labels as displayed on a communications device supporting voice and data services and utilizing the user interface system;

Fig. 2C illustrates an exemplary user interface comprising a list of selectable labels as displayed on a communications device supporting voice and data services and utilizing the user interface system;

Fig. 3A illustrates an alternative exemplary user interface comprising an alternative menu as displayed on a communications device supporting voice and data services and utilizing the user interface system;

Fig. 3B illustrates an alternative exemplary user interface comprising a sub-menu of selectable labels as displayed on a communications device supporting voice and data services and utilizing the user interface system;

Fig. 3C illustrates an alternative exemplary user interface comprising a list of selectable labels as displayed on a communications device supporting voice and data services and utilizing the user interface system;

Fig. 4 illustrates a data processing mechanism for enabling the user interface system; and

Fig. 5 illustrates a communications device utilizing the data processing mechanism for enabling the user interface system.

### DETAILED DESCRIPTION

While the use and implementation of particular embodiments of the present invention are presented in detail below, it will be understood that the present invention provides many inventive concepts, which can be embodied in a wide variety of contexts. The specific embodiments discussed herein are merely illustrative of specific ways to make and use the invention and are not intended to limit the scope of the invention.

A user interface system for managing communications messages of a communications device for processing and storing data and capable of supporting voice and data services is presented. The user interface upon receiving a data element, wherein the data element identifies a type of communications message received, and sender identification, displays a menu comprising at least one selectable object for each message type received, wherein each selectable object comprises a label identifying the message type. Upon user selection, the user interface system displays the message associated with the selectable object if only one message is associated with the selectable object; or either displays a list or sub-menu comprising a sender identification label for each message received. If the list or sub-menu comprising the sender identification item is displayed, upon receiving a user selection the user interface system generates a communications action to display the selected message associated with the sender identification label if the communications message is an email, call log, IM, SMS messages or something equivalent; or the user interface system generates a communications action to connect to a voice mail system associated with the mobile communications device allowing access to a selected voice message if the communications message is a voice mail message. Specific information concerning how a communications device can access specific voice mail messages from a voice mail system can be obtained from pg. 12-27 of U.S. application 10/456181.

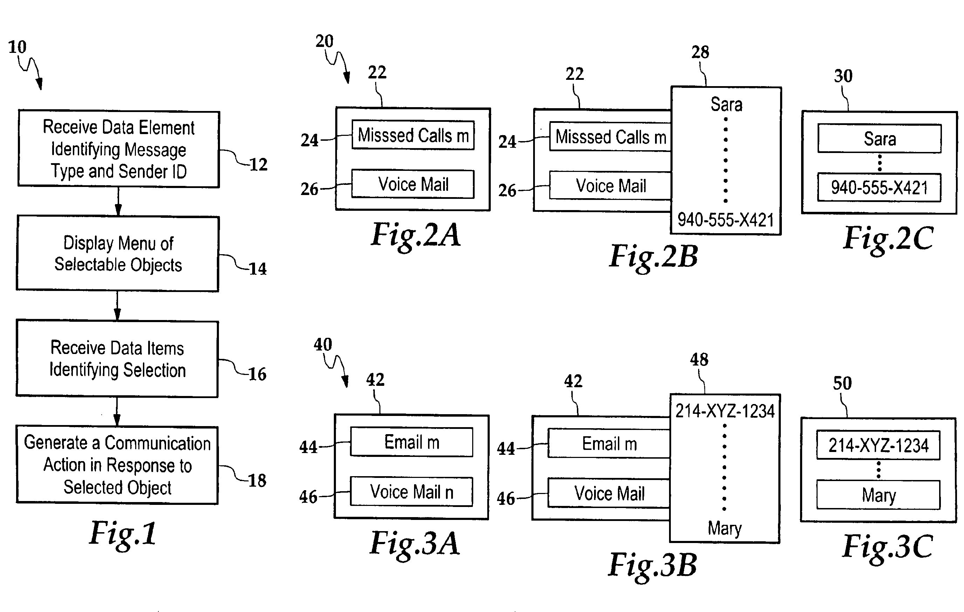

Referring to Figure 1, a block diagram of the user interface system for use in a communications device is illustrated and denoted generally as 10. At block 12, the user interface system receives a data element for each received communications message, such as a voice mail, a call log, an email, a Simple Mail Service (SMS), or an Instant Message (IM). The data element comprises information identifying the type of communications message received and sender identification, such as sender number or name. Additional information provided to the user interface system may include indication of attachments, and urgency of the communications. Next, block 14, the user interface system, upon receiving the data element for each communications message, displays a menu with a selectable object for each type of message received. Each selectable object comprises a label identifying the message type. In addition, the label may also include the number of a particular type of communications message received. Upon the user interface system receiving a data item indicating a selected object, block 16, the user interface system generates a communications action in response to the selected object, block 18. The generation of communications action is dependent on which message type is associated with a selected object and how many communication messages are associated with the selected object. In the case that only one message is associated with a selected object, the user interface system either generates a communications action to display the communication message if the communications message is an email, SMS, IM, call log message or any other comparable message; or if it is a voice mail message, the user interface system generates a communications action to either connect to the voice mail system associated with mobile communications device where the voice mail message resides, which requires user navigation to access the voice mail message, or connect directly to the voice mail within the voice mail system without requiring user navigation. If, however, in the case where multiple communication messages are associated with the selectable object, the user interface system either generates a communications action to display a list comprising sender identification labels for each communications message received, or a sub-menu comprising sender identification labels for each communications message received. The user interface system, in the case of selectable items in either the list or the sub-menu, may then receive another data item identifying selection. Depending on the message type associated with the item in the list or sub-menu, the interface system can generate a communications action to display the communications message associated with the selected label, in the case of email, SMS, or IM; or connect to a voice mail system, requiring user navigation, or connect directly to the voice mail within the voice mail selected within the voice mail system, which would not require user navigation.

Referring to Figures 2A, 2B, and 2C, exemplary user interfaces as displayed on a communications device supporting voice and data services and utilizing the user interface system as described with respect to Figure 1 is illustrated and denoted generally as 20. The user interface in Figure 2A comprises a menu 22 with selectable objects 24, 26. The selectable objects 24, 26 maybe labeled according to the message type. Upon receiving a communications message and according to the number of communications messages received, the user interface system displays the menu 22 with the selectable objects 24, 26, as in this example the menu 22 comprises a number, m, of missed calls and voice mail messages. In this particular example, upon the selection of the selectable object 24, the user interface system either displays a call log associated with a missed call if only one missed call is received, or in the case multiple missed calls are received, a sub-menu 28, as illustrated in Figure 2B, comprising sender identification labels, such as an identification number or name, associated with each communications messages received, or a list 30, as illustrated in Figure 2C, comprising sender identification labels, again such as number or name identification, associated with each communications message received. In addition, other information may be included along with sender identification information, such as time, date, urgency, and attachment indication. The user interface system may then receive a data item identifying selection of one of the sender identification labels resulting in the user interface system generating a communications action to display a call log associated with the selected label. The call log may comprise information such as time, date, and sender identification information. Also in this particular example, upon the selection of selectable object 26, the user interface system generates a communications action to connect to the voice mail system associated with the communications device allowing the user to navigate the voice mail system to obtain voice mail messages. Once the communications message has been accessed by the user, the interface system receives a data item indicating such action and removes the associated information from the information associated with received communications messages.

Referring to Figures 3A, 3B, and 3C, another exemplary user interfaces as displayed on a communications device supporting voice and data services and utilizing the user interface system as described with respect to Figure 1 is illustrated and denoted generally as 40. The user interface in Figure 2A comprises a menu 42 with selectable objects 44, 46. The selectable objects 44, 46 are labeled according to the message type, and may also include a number indicating the number of communications messages received. Upon receiving a communications message and according to the number of communications messages received, the user interface system displays the menu 42 with the selectable objects 44, 46. As in this example, the menu 42 comprises the selectable object 44 having an email label and a number, m, indicating the number of emails received, and the selectable object 46 having a voice mail label and a number, n, indicating the number of voice mails received. In the case selectable object 44 is selected, the user interface system either displays the email message in the case only one email message was received; or displays a sub-menu 48, as illustrated in Figure 3B, or a list 50, as illustrated in Figure 3C, comprising sender identification labels for each of the received communications messages. The user interface system may then receive a data item identifying selection of one of the sender identification labels resulting in the user interface system generating a communications action to display the selected email. In the case selectable object 46 is selected, either the user interface system generates a communications action to connect directly a voice mail message of a voice mail system associated with the communications device in the case only one voice mail received; or, in the case more than one voice mail message received, display either a sub-menu 48 comprising scrollable and selectable labels one for each voice mail message received, or a list 50 comprising scrollable and selectable labels one for each voice mail message received. Upon the user interface system receiving a data item identifying label selection, the user interface system generates a communications action to connect to the selected voice mail system associated with the communications device without requiring navigation. Once the communications message has been accessed by the user, the interface system receives a data item indicating such action and removes the associated information from the information associated with received communications messages.

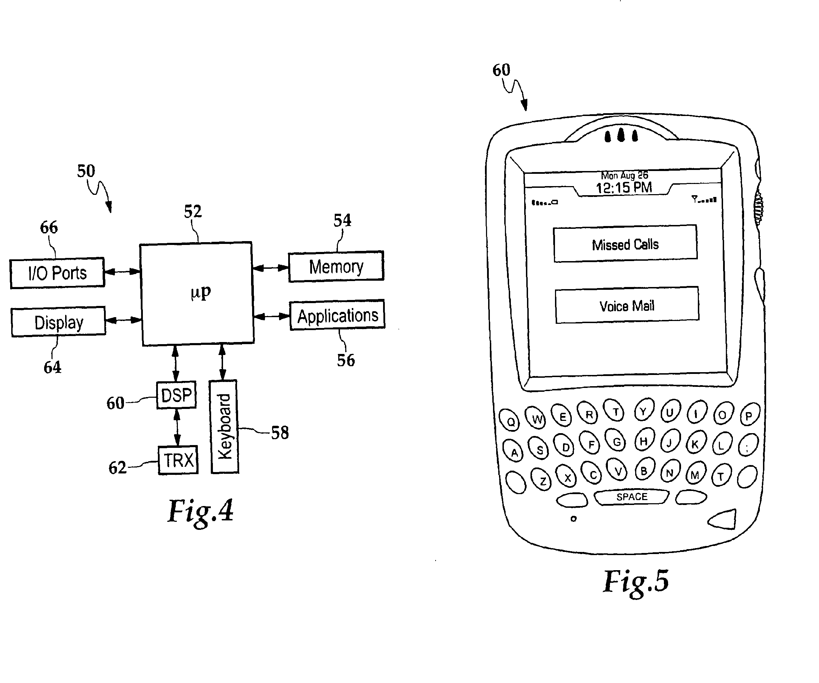

Referring now to Figure 4, a data processing mechanism for enabling the user interface system 10 is illustrated and denoted generally as 50. Data processing mechanism 50 comprises a processor 52 for executing instructions, a memory 54 for storing information, an applications module 56 for storing software applications, such as the user interface system 10, at least one Input output I/O port 58 for peripherals, for example for a keyboard, a microphone, speaker, a USB port, a scrolling means, such as a scroll wheel, a scroll switch, or a scroll strip, each scrolling means may comprise a selectable action feature. The Data processing mechanism 50 further includes a Digital Signal Processor (DSP) 60 for interfacing communication messages between a transceiver mechanism 62 and the microprocessor 52. The data processing mechanism 50 may be utilized in a mobile communications device 60, as illustrated in Figure 5, capable of accessing wireless communication services, such as W-CDMA, CDMA2000, CDMA1X DO, CDMA 1X DV, EDGE, GPRS, W-LAN, W-FI, GSM, or any other wireless communications interface capable of delivering voice and data services.

Although the illustrated Figures provide a couple of examples for managing a number of communications messages, it should be understood that the number and type of selectable objects can vary depending on the communications messages received and that the number of communication messages associated with a selectable object can vary also depending on the communications received. The interface system could also modify the size format of the selectable objects or provide means of scrolling to navigate the selectable objects if the number of selectable objects exceeds a viewable size of a display. It should also be understood that the methods and mechanisms used to access a particular voice mail of a voice mail systems are the subject of another pending patent application held by the same Assignee.

While the use and implementation of particular embodiments of the present invention are presented in detail below, it will be understood that the present invention provides many inventive concepts, which can be embodied in a wide variety of contexts. The specific embodiments discussed herein are mere illustrations of specific ways for making and using the invention and are not intended to limit the scope of the invention.

## Claims

1. A method of operating a communications device (10) comprising the steps of:
receiving a communications message (12) that includes information relating to communications message type and sender identification;
displaying a menu (14) upon receiving the communications message, the menu including a first selectable object having a label identifying a first communications message type,
and a second selectable object having a label identifying a second message type;
receiving an indication of selection (16) of one of the first and second selectable objects; and
generating a communications action (18) comprising displaying a list of sender identification labels (30) relating to a plurality of messages from a plurality of senders in response to the selection of one of the first and second selectable objects; the method being **characterised in that** the label of the first selectable object also identifies a first number of messages of the first type and the label of the second selectable object also identifies a second number of messages of the second type.

2. The method of claim 1 wherein the communications message is selected from the group consisting of a call log, a Simple Message Service (SMS) message, an Instant Message (IM) and an email message.

3. The method of claim 1 wherein generating the communications action (18) further comprises displaying the communications message.

4. The method of claim 1 wherein generating a communications action (18) further comprises displaying a list of scrollable and selectable sender identification labels (30).

5. The method of claim 4 further comprising receiving an indication of selection of a sender identification label (30) and connecting to a voice mail message associated with the selected sender identification label (30).

6. The method of claim 4 further comprising receiving an indication of selection of a sender identification label (30) and connecting to a voice mail system upon receiving the selection.

7. The method of claim 4 further comprising receiving an indication of selection of a sender identification label (30) and displaying the communications message associated with the selected sender identification label (30).

8. A communications device (60) comprising:
means for receiving a communications message (12) that includes information relating to communications message type and sender identification;
means for displaying a menu (14) upon receiving the communications message, the menu including a first selectable object having a label identifying a first message type and a second selectable object having a label identifying a second message type;
means for receiving an indication of selection (16) of one of the first and second selectable objects; and
means for generating a communications action (18) comprising displaying a list of sender identification labels (30) relating to a plurality of messages from a plurality of senders in response to the selection of one of the first and second selectable objects; the device being **characterised in that** the label of the first selectable object also identifies a first number of messages of the first type and the label of the second selectable object also identifies a second number of messages of the second type.

9. The communications device (60) of claim 8 wherein the communications message is selected from the group consisting of a call log, a Simple Message Service (SMS) message, an Instant Message (IM) and an email message.

10. The communications device (60) of claim 8 wherein the means for generating a communications action (18) further comprises means for displaying the communications message (30).

11. The communications device (60) of claim 8 wherein the means for generating a communications action (18) further comprises means for displaying a list of scrollable and selectable sender identification labels (30).

12. The communications device (60) of claim 11 further comprising means for receiving an indication of selection of a sender identification label (30) and means for connecting to a voice mail message associated with the selected sender identification label.

13. The communications device (60) of claim 11 further comprising means for receiving an indication of selection of a sender identification label (30) and means for connecting to a voice mail system upon receiving the selection.

14. The communications device (60) of claim 11 further comprising means for receiving an indication of selection of a sender identification label (30) and means for displaying the communications message associated with the selected sender identification label (30).

## Patentansprüche

1. Verfahren zum Betreiben einer Kommunikationsvorrichtung (10), das die Schritte aufweist:
Empfangen einer Kommunikationsnachricht (12), die Information hinsichtlich eines Kommunikationsnachrichtentyps und einer Senderidentifikation umfasst;
Anzeigen eines Menüs (14) bei Empfang der Kommunikationsnachricht, wobei das Menü ein erstes wählbares Objekt mit einem Label bzw. Etikett, das einen ersten Kommunikationsnachrichtentyp identifiziert, und ein zweites wählbares Objekt mit einem Label umfasst, das einen zweiten Nachrichtentyp identifiziert;
Empfangen einer Anzeige einer Auswahl (16) eines der ersten und zweiten wählbaren Objekte; und
Erzeugen einer Kommunikationsaktion (18), die aufweist ein Anzeigen einer Liste von Senderidentifikationslabels (30), die eine Vielzahl von Nachrichten von einer Vielzahl von Sendern betreffen, als Reaktion auf die Auswahl eines der ersten und zweiten wählbaren Objekte;
wobei das Verfahren **dadurch gekennzeichnet ist, dass** das Label des ersten wählbaren Objekts auch eine erste Anzahl von Nachrichten des ersten Typs identifiziert und das Label des zweiten wählbaren Objekts auch eine zweite Anzahl von Nachrichten des zweiten Typs identifiziert.

2. Verfahren gemäß Anspruch 1, wobei die Kommunikationsnachricht aus der Gruppe gewählt wird, die aus einem Anruf-Log, einer SMS(Simple Message Service)-Nachricht, einer Instant Message (IM) und einer Email-Nachricht besteht.

3. Verfahren gemäß Anspruch 1, wobei ein Erzeugen der Kommunikationsaktion (18) weiter ein Anzeigen der Kommunikationsnachricht aufweist.

4. Verfahren gemäß Anspruch 1, wobei ein Erzeugen einer Kommunikationsaktion (18) weiter ein Anzeigen einer Liste von scrollbaren und auswählbaren Senderidentifikationslabels (30) aufweist.

5. Verfahren gemäß Anspruch 4, das weiter aufweist Empfangen einer Anzeige einer Auswahl eines Senderidentifikationslabels (30) und Verbinden mit einer Voicemail-Nachricht, die zu dem gewählten Senderidentifikationslabel (30) gehört.

6. Verfahren gemäß Anspruch 4, das weiter aufweist ein Empfangen einer Anzeige einer Auswahl eines Senderidentifikationslabels (30) und Verbinden mit einem Voicemail-System bei Empfang der Auswahl.

7. Verfahren gemäß Anspruch 4, das weiter aufweist eine Anzeige einer Auswahl eines Senderidentifikationslabels (30) und Anzeigen der Kommunikationsnachricht, die zu dem gewählten Senderidentifikationslabel (30) gehört.

8. Kommunikationsvorrichtung (60), die aufweist:
Mittel zum Empfangen einer Kommunikationsnachricht (12), die Information hinsichtlich eines Kommunikationsnachrichtentyps und einer Senderidentifikation umfasst;
Mittel zum Anzeigen eines Menüs (14) bei Empfang der Kommunikationsnachricht, wobei das Menü ein erstes wählbares Objekt mit einem Label bzw. Etikett, das einen ersten Nachrichtentyp identifiziert, und ein zweites wählbares Objekt mit einem Label umfasst, das einen zweiten Nachrichtentyp identifiziert;
Mittel zum Empfangen einer Anzeige einer Auswahl (16) eines der ersten und zweiten wählbaren Objekte; und
Mittel zum Erzeugen einer Kommunikationsaktion (18), die aufweist ein Anzeigen einer Liste von Senderidentifikationslabels (30), die eine Vielzahl von Nachrichten von einer Vielzahl von Sendern betreffen, als Reaktion auf die Auswahl eines der ersten und zweiten wählbaren Objekte;
wobei die Vorrichtung **dadurch gekennzeichnet ist, dass** das Label des ersten wählbaren Objekts auch eine erste Anzahl von Nachrichten des ersten Typs identifiziert und das Label des zweiten wählbaren Objekts auch eine zweite Anzahl von Nachrichten des zweiten Typs identifiziert.

9. Kommunikationsvorrichtung (60) gemäß Anspruch 8, wobei die Kommunikationsnachricht aus der Gruppe gewählt wird, die aus einem Anruf-Log, einer SMS(Simple Message Service)-Nachricht, einer Instant Message (IM) und einer Email-Nachricht besteht.

10. Kommunikationsvornchtung (60) gemäß Anspruch 8, wobei das Mittel zum Erzeugen einer Kommunikationsaktion (18) weiter Mittel zum Anzeigen der Kommunikationsnachricht (30) aufweist.

11. Kommunikationsvorrichtung (60) gemäß Anspruch 8, wobei das Mittel zum Erzeugen einer Kommunikationsaktion (18) weiter Mittel zum Anzeigen einer Liste von scrollbaren und auswählbaren Senderidentifikationslabels (30) aufweist.

12. Kommunikationsvorrichtung (60) gemäß Anspruch 11, die weiter aufweist Mittel zum Empfangen einer Anzeige einer Auswahl eines Senderidentifikationslabels (30) und Mittel zum Verbinden mit einer Voicemail-Nachricht, die zu dem gewählten Senderidentifikationslabel gehört.

13. Kommunikationsvorrichtung (60) gemäß Anspruch 11, die weiter aufweist Mittel zum Empfangen einer Anzeige einer Auswahl eines Senderidentifikationslabels (30) und Mittel zum Verbinden mit einem Voicemail-System bei Empfang der Auswahl.

14. Kommunikationsvorrichtung (60) gemäß Anspruch 11, die weiter aufweist Mittel zum Empfangen einer Anzeige einer Auswahl eines Senderidentifikationslabels (30) und Mittel zum Anzeigen der Kommunikationsnachricht, die zu dem gewählten Senderidentifikationslabel (30) gehört.

## Revendications

1. Procédé pour faire fonctionner un dispositif (10) de communications comprenant les étapes qui consistent :
à recevoir un message (12) de communications qui contient une information concernant un type de message de communications et une identification d'expéditeur ;
à afficher un menu (14) à la réception du message de communications, le menu contenant un premier objet pouvant être sélectionné ayant une étiquette identifiant un premier type de message de communications, et un second objet pouvant être sélectionné, ayant une étiquette identifiant un second type de message ;
à recevoir une indication de sélection (16) de l'un des premier et second objets pouvant être sélectionnés ; et
à générer une action (18) de communications comprenant l'affichage d'une liste d'étiquettes (30) d'identification d'expéditeur concernant de multiples messages provenant de multiples expéditeurs en réponse à la sélection de l'un des premier et second objets pouvant être sélectionnés ;
le procédé étant **caractérisé en ce que** l'étiquette du premier objet pouvant être sélectionné identifie aussi un premier nombre de messages du premier type et l'étiquette du second objet pouvant être sélectionné identifie aussi un second nombre de messages du second type.

2. Procédé selon la revendication 1, dans lequel le message de communications est sélectionné dans le groupe constitué d'un journal d'appels, d'un message du service de messages simples (SMS), d'un message instantané (IM) et d'un message de courrier électronique.

3. Procédé selon la revendication 1, dans lequel la génération de l'action de communications (18) comprend en outre l'affichage du message de communications.

4. Procédé selon la revendication 1, dans lequel la génération d'une action de communications (18) comprend en outre l'affichage d'une liste d'étiquettes d'identification d'expéditeur qu'on peut faire défiler et sélectionner.

5. Procédé selon la revendication 4, comprenant en outre la réception d'une indication d'une sélection d'une étiquette (30) d'identification d'expéditeur et la connexion à un message de courrier vocal associé à l'étiquette (30) d'identification d'expéditeur sélectionnée.

6. Procédé selon la revendication 4, comprenant en outre la réception d'une indication de sélection d'une étiquette (30) d'identification d'expéditeur et la connexion à un service de courrier vocal à la suite de la réception de la sélection.

7. Procédé selon la revendication 4, comprenant en outre la réception d'une indication d'une sélection d'une étiquette (30) d'identification d'expéditeur et l'affichage du message de communications associé à l'étiquette sélectionnée (30) d'identification d'expéditeur.

8. Dispositif (60) de communications comportant :
un moyen destiné à recevoir un message (12) de communications qui contient une information concernant un type de message de communications et une identification d'expéditeur ;
un moyen destiné à afficher un menu (14) à la suite de la réception du message de communications, le menu comprenant un premier objet pouvant être sélectionné ayant une étiquette identifiant un premier type de message, et un second objet pouvant être sélectionné ayant une étiquette identifiant un second type de message ;
un moyen destiné à recevoir une indication de sélection (16) de l'un des premier et second objets pouvant être sélectionnés ; et
un moyen destiné à générer une action de communications (18) comprenant l'affichage d'une liste d'étiquettes (30) d'identification d'expéditeurs concernant de multiples messages provenant de multiples expéditeurs en réponse à la sélection de l'un des premier et second objets pouvant être sélectionnés ; le dispositif étant **caractérisé en ce que** l'étiquette du premier objet pouvant être sélectionné identifie aussi un premier nombre de messages du premier type et l'étiquette du second objet pouvant être sélectionné identifie aussi un second nombre de messages du second type.

9. Dispositif (60) de communications selon la revendication 8, dans lequel le message de communications est sélectionné dans le groupe constitué d'un journal d'appels, d'un message du service de messages simples (SMS), d'un message instantané (IM) et d'un message de courrier électronique.

10. Dispositif (60) de communications selon la revendication 8, dans lequel le moyen destiné à générer une action de communications (18) comprend en outre un moyen destiné à afficher le message de communications (30).

11. Dispositif de communications (60) selon la revendication 8, dans lequel le moyen destiné à générer une action de communications (18) comprend en outre un moyen destiné à afficher une liste d'étiquettes (30) d'identification d'expéditeur qu'on peut faire défiler et sélectionner.

12. Dispositif de communications (60) selon la revendication 11, comportant en outre un moyen destiné à recevoir une indication d'une sélection d'une étiquette (30) d'identification d'expéditeur et un moyen destiné à se connecter à un message de courrier vocal associé à l'étiquette sélectionnée d'identification d'expéditeur.

13. Dispositif de communications (60) selon la revendication 11, comportant en outre un moyen destiné à recevoir une indication d'une sélection d'une étiquette (30) d'identification d'expéditeur et un moyen destiné à se connecter à un système de courrier vocal à la suite de la réception de la sélection.

14. Dispositif de communications (60) selon la revendication 11, comportant en outre un moyen destiné à recevoir une indication d'une sélection d'une étiquette (30) d'identification d'expéditeur et un moyen destiné à afficher le message de communications associé à l'étiquette sélectionnée (30) d'identification d'expéditeur.
